(19) Europäisches Patentamt
European Patent Office
Office européen des brevets

(11) **EP 1 646 855 B1**

(12) **EUROPÄISCHE PATENTSCHRIFT**

(45) Veröffentlichungstag und Bekanntmachung des Hinweises auf die Patenterteilung:
**31.08.2016 Patentblatt 2016/35**

(21) Anmeldenummer: **04740739.0**

(22) Anmeldetag: **07.07.2004**

(51) Int Cl.:
**G01M 11/02** *(2006.01)*

(86) Internationale Anmeldenummer:
**PCT/EP2004/007425**

(87) Internationale Veröffentlichungsnummer:
**WO 2005/017482 (24.02.2005 Gazette 2005/08)**

(54) **VERFAHREN UND VORRICHTUNG ZUM SICHTBARMACHEN EINEN SIGNIERZEICHENS AUF EINEM BRILLENGLAS**

METHOD AND DEVICE FOR VISUALIZING A MARK ON A SPECTACLE LENS

PROCEDE ET DISPOSITIF POUR VISUALISER UN REPERE SUR UN VERRE DE LUNETTES

(84) Benannte Vertragsstaaten:
**AT BE BG CH CY CZ DK EE ES FI FR GB GR HU IE IT LI LU MC NL PL PT RO SE SI SK TR**

(30) Priorität: **17.07.2003 DE 10333426**

(43) Veröffentlichungstag der Anmeldung:
**19.04.2006 Patentblatt 2006/16**

(73) Patentinhaber: **Carl Zeiss Vision GmbH
73430 Aalen (DE)**

(72) Erfinder:
• **HORNAUER, Matthias
73430 Aalen (DE)**
• **HANSSEN, Adalbert
89551 Königsbronn (DE)**

(74) Vertreter: **Witte, Weller & Partner Patentanwälte mbB
Postfach 10 54 62
70047 Stuttgart (DE)**

(56) Entgegenhaltungen:
**EP-A- 1 167 942    US-A- 5 867 259**

**Beschreibung**

Die Erfindung betrifft ein Verfahren zum Sichtbarmachen eines Signierzeichens auf einem Brillenglas. Die Erfindung betrifft weiter ein Verfahren zum Messen einer physikalischen Eigenschaft eines mit einem Signierzeichen versehenen Brillenglases, Die Erfindung betrifft darüber hinaus eine Vorrichtung zum Sichtbarmachen eines Signierzeichens auf einem Brillenglas. Die Erfindung betrifft schließlich noch eine Vorrichtung zum Messen einer physikalischen Eigenschaft eines mit einem Signierzeichen versehenen Brillenglases.

Brillengläser, insbesondere sog. Gleitsichtgläser, werden mit Signierzeichen versehen, deren Lage während der Produktion des Brillenglases erfasst und verarbeitet wird, um das Brillenglas lagerichtig zu spannen, zu bearbeiten, zu stempeln und schließlich in die Brille des Endabnehmers zu bringen. Signierzeichen werden auf Brillengläsern dauerhaft angebracht und zwar durch Diamantritzverfahren, durch Abformen beim Gießen von Kunststoff-Brillengläsern oder durch Lasersignierung. Daneben umfasst der Begriff "Signierzeichen" im Rahmen der vorliegenden Erfindung auch andere Unregelmäßigkeiten des Brillenglases, z.B. Schlieren im Glasmaterial oder Kunststoff.

Wenn im Rahmen der vorliegende Anmeldung von "Brillengläsern" die Rede ist, so sind darunter auch Haftschalen und andere vergleichbare optische Bauteile zu verstehen.

Damit der Brillenträger durch die Signierzeichen bei der Benutzung der Brille nicht gestört wird, sind diese Zeichen so gestaltet, dass sie nur bei sehr speziellen Lichtverhältnissen erkennbar sind. Die Erkennung der Lage eines Signierzeichens auf einem Brillenglas während des Produktionsprozesses ist deshalb schwierig. Erschwerend kommt dabei hinzu, dass die im Produktionsprozess befindlichen Brillengläser in Folge der speziellen Anforderungen der späteren Brillenträger sehr unterschiedliche optischen Wirkungen haben. Innerhalb der Produktion folgen daher Brillengläser mit diesen unterschiedlichen optischen Wirkungen dicht aufeinander, die also in rascher Folge beim aufeinanderfolgenden Bearbeiten einzelner Brillengläser beachtet werden müssen.

Für eine Kontrolle von Gleitsichtgläsern im Fern- und Nahbezugspunkt ist es erforderlich, in Abhängigkeit von den aufgebrachten Signierzeichen die Wirkung der Gleitsichtgläser an festgelegten Koordinaten auf dem Brillenglas zu messen. Für eine manuelle oder für eine automatische Messung müssen die Signierzeichen daher sichtbar gemacht werden. Dies geschieht bei bekannten Verfahren und Vorrichtungen mittels rhombenförmiger Gitter oder Streifenmustern, die unscharf abgebildet werden und deren Kantenübergänge hell/dunkel das Signierzeichen erkennbar machen.

Nachteil dieser bekannten Vorgehensweise ist, insbesondere beim automatischen Erkennen der Signierzeichen, dass das Gitter je nach Wirkung des untersuchten Brillenglases unterschiedlich vergrößert abgebildet wird, nämlich in Abhängigkeit von der jeweiligen dioptrischen Wirkung des Brillenglases. Es ist daher erforderlich, für die Erkennung der Signierzeichen einen erheblichen Aufwand hinsichtlich der eingesetzten Algorithmen zu betreiben. Bekannte Verfahren haben bislang nicht zu einer vollständig sicheren automatischen Erkennung geführt. Es ist daher in der heutigen Praxis erforderlich, dass auch bei automatisierten Prüfanlagen eine speziell geschulte Arbeitskraft manuell in den Produktionsprozess eingreifen und Fehlerkennungen korrigieren muss.

Aber auch dann, wenn die Signierzeichen innerhalb eines Produktionsprozesses mittels eines manuellen Prüfvorganges erkannt werden, ist die Situation ähnlich. In diesem Falle wird je nach dem verwendeten Signierverfahren eine unterschiedliche Beleuchtung eingesetzt, um die Signierzeichen sichtbar zu machen. Bei bekannten Vorrichtungen geschieht dies durch manuelles Umstecken von Beleuchtungseinheiten. Allerdings sind auch bei diesen manuellen Verfahren die Zeichen selber nur undeutlich zu erkennen, so dass Fehler bei der Positionierung und Ausrichtung des jeweiligen Brillenglases möglich sind. Dies gilt auch und gerade im Hinblick auf die für die Erkennung des Signierzeichens zur Verfügung stehende Zeit. Aus diesen Gründen ist es insbesondere bei Kunststoff-Brillengläsern notwendig, die Brillengläser vor dem eigentlichen Erkennen des Signierzeichens von Hand mittels eines Filzstiftes oder dgl. zu markieren ("anzupunkten"), was zusätzlichen Aufwand an Arbeit und Zeit erfordert.

Entsprechende Überlegungen gelten auch für einen anderen Bereich innerhalb der Bearbeitung derartiger Brillengläser, nämlich für Stempelautomaten, die nach dem heutigen Stand der Technik ebenfalls der Assistenz einer Bedienungsperson bedürfen. Diese beobachtet die Brillengläser auf einem Bildschirm, um nicht automatisch erkannte Positionen von Signierzeichen manuell im System zu korrigieren, beispielsweise mittels einer Rollkugel-Eingabe. Dieser Nachteil drückt sich ebenfalls in einer Verminderung der Produktivität der videounterstützten, manuell betätigten Stempelmaschinen aus.

Aus der US 3,892,494 sind ein Verfahren und eine Vorrichtung zum Auffinden von optischen Mikroeffekten an optischen Bauteilen, beispielsweise Linsen, bekannt. Dabei wird ein Laserstrahl durch einen Strahlenteiler, nämlich einen teildurchlässigen Spiegel, auf das zu untersuchende Bauteil gerichtet. Der Laserstrahl läuft durch das Bauteil hindurch und trifft auf der gegenüberliegenden Seite auf einen Retroreflektor, beispielsweise eine Retroreflexfolie, von dem er wieder durch das Bauteil hindurch reflektiert wird und denselben Strahlengang zurückläuft, bis er am Strahlenteiler ausgelenkt und auf eine Kamera gerichtet wird.

Nachteil dieser bekannten Vorgehensweise ist, dass sie bei Brillengläsern mit sehr unterschiedlicher Durchbiegung zu Problemen führen kann. Wegen der sehr unterschiedlichen Durchbiegung muss nämlich der Beobachtungsstrahlengang lang und außerdem abgeblendet sein, um eine ausreichende Schärfentiefe zu erhalten. Andererseits sollen die Strukturen des Retroreflektors aber nicht scharf abgebildet werden, da man zur Vermeidung von Fehlinterpretationen doch einen relativ homogenen Hintergrund haben möchte. Folglich muss der Retroreflektor bei diesen Anwendungen sehr weit hinter der Ebene des zu vermessenden Brillenglases liegen und er müsste außerdem sehr groß sein, weil stark negative Brillengläser den Retroreflektor stark verkleinert abbilden, so dass nicht mehr das ganze Glas über dem Retroreflektor gesehen werden kann.

Hinzu kommt, dass es im Rahmen der vorliegenden Erfindung nicht allein um das Erkennen von Signierzeichen und sonstigen Unregelmäßigkeiten auf Brillengläsern geht, sondern vielmehr um die Integration dieses Erkennungsprozesses in ein Messgerät oder in einen Bearbeitungsprozess. Dann ist aber hinter dem Brillenglas, also auf derselben Seite wie der Retroreflektor bei der bekannten Vorrichtung, ein Sensor angeordnet, um physikalische Eigenschaften des Brillenglases zu messen. Es ist daher aus konstruktiven Gründen nicht möglich, in diesem Fall den Retroreflektor sehr weit hinter der Ebene des Brillenglases anzuordnen.

Aus der US 4,310,242 ist eine Anordnung bekannt, um die optische Qualität von Windschutzscheiben an Ort und Stelle zu vermessen. Auch hier wird eine optische Anordnung mit einer Lichtquelle, einem Strahlenteiler, einem hinter der zu vermessenden Windschutzscheibe positionierten Retroreflektor sowie einer Kamera eingesetzt. Dabei wird durch den Strahlenteiler ein feines Muster auf einen retroreflektierenden Schirm projiziert, derart, dass auf dem retroreflektierenden Schirm ein reelles Bild dieses Musters entsteht, das durch die im Strahlengang befindliche Windschutzscheibe deformiert ist. Über den Strahlenteiler schaut nun die Kamera in Projektionsrichtung ebenfalls durch die zu prüfende Windschutzscheibe auf den retroreflektierenden Schirm. Inhomogenitäten, Spannungsdoppelbrechungen, Schlieren usw. werden auf diese Weise deutlich sichtbar.

Aus der DE 43 43 345 A1 sind Verfahren und Vorrichtungen zur Messung der reflektiven bzw. transmittierenden optischen Eigenschaften einer Probe bekannt. Dabei wird eine Messstrahlung auf eine Probe gerichtet, die von der Probe reflektiert wird, so dass sie auf einen Retroreflektor gelangt, der die Messstrahlung wieder über das Objekt zur Lichtquelle zurückschickt, wo eine Auskopplung zu einem Detektor stattfindet.

Eine weitere ähnliche Vorgehensweise ist auch in der EP 0 169 444 A2 beschrieben.

Bei einem bekannten Scheitelbrechwert-Messgerät "Focovision SG 1" wird ein Lichtstrahl von einer Lichtquelle durch ein Grünfilter geschickt und über einen Strahlenteiler auf das zu prüfende Brillenglas gerichtet. Der Lichtstrahl durchsetzt das Brillenglas und gelangt auf einen hinter der Rückseite des Brillenglases angeordneten Sensorkopf. Auf diese Weise können physikalische Eigenschaften des Brillenglases vermessen werden. Auf der Rückseite befindet sich ferner eine Ebene, in der austauschbare Beleuchtungszusätze angeordnet werden können. Diese Beleuchtungszusätze beleuchten das Brillenglas von hinten, so dass die Signierzeichen sichtbar werden. Ein entsprechender Beobachtungs-Lichtstrahl gelangt von dem Brillenglas zu dem Strahlenteiler, wird dort reflektiert und dann über weitere optische Mittel zu einer Kamera geführt. Bei einem ersten Beleuchtungszusatz wird ein sehr scharf begrenztes helles Lichtbündel unter einem flachen Winkel auf das Brillenglas gerichtet. Signierzeichen, die durch Kratzen hergestellt wurden, leuchten dann auf Grund der irregulären Gestalt der Kratzspur hell vor einem dunklen Hintergrund auf. Der zweite Beleuchtungszusatz ist hingegen für Brillengläser vorgesehen, deren Signierzeichen nicht durch Kratzen, sondern durch Abformen oder durch Laserstrahlen erzeugt worden sind. Dieser zweite Beleuchtungszusatz weist ein von unten beleuchtetes helles Liniengitter und mehrere nebeneinander angeordnete Hilfslinsen auf, mit denen diese leuchtenden Gitter nach unendlich abgebildet werden.

Die bekannte Vorrichtung ist daher relativ aufwändig in der Bedienung. Ferner fällt der Ort, an dem der von der Lichtquelle ausgesandte Messstrahl auf das Brillenglas fällt, mit dem Ort zusammen, an dem der Beobachtungs-Lichtstrahl aus dem Brillenglas austritt. Dies kann zu Störungen bei der Auswertung führen.

aus der DE 197 40 391 ist noch eine Beobachtungsvorrichtung für verdeckte Markierungen, d.h. Signierungen, bekannt. Bei dieser Vorrichtung wird eine Linse, die mit der verdeckten Markierung versehen ist, mit einem Beleuchtungslicht beleuchtet. Die verdeckte Markierung wird dann als ein von dem Beleuchtungslicht gebildeter Schatten der Linse beobachtet.

Bei dieser Vorrichtung ist von Nachteil, dass die Markierung je nach Art der Linse durch deren lokale prismatische Wirkung verschoben oder durch die sammelnde bzw. zerstreuende Wirkung der Linse verkleinert bzw. vergrößert wird.

Des Weiteren zeigt die Druckschrift EP 1 167 942 A2 ein Brillenglaspositionierverfahren und eine Brillenglasbilderfassungsverarbeitungsvorrichtung.

Des Weiteren zeigt die Druckschrift US 5867259 A eine Beleuchtungsvorrichtung für eine versteckte Markierung.

Der Erfindung liegt daher die Aufgabe zugrunde, Verfahren und Vorrichtungen der eingangs genannten Art dahingehend weiterzubilden, dass die genannten Nachteile vermieden werden. Insbesondere soll ermöglicht werden, Brillengläser innerhalb eines Produktionsprozesses zu behandeln, indem einerseits die darauf angebrachten Signierzeichen lagerichtig erkannt werden, andererseits aber auch eine Vermessung des Brillenglases innerhalb desselben Verfahrens und auch innerhalb derselben Vorrichtung möglich ist. All dies soll mit möglichst einfachen apparativen und verfahrensmäßigen Mitteln geschehen.

Es wird daher ein Verfahren zum Sichtbarmachen eines Signierzeichens auf einem Brillenglas bereitgestellt, bei dem ein Beleuchtungs-Lichtstrahl auf das Brillenglas gerichtet wird, der das Brillenglas durchläuft, nach dem Durchlaufen des Brillenglases an einem bewegten Reflektor reflektiert wird, das Brillenglas erneut durchläuft, und schließlich als Beobachtungs-Lichtstrahl einer Kamera zugeleitet wird, wobei der Reflektor als Retroreflektor ausgebildet ist, der einfallendes Licht über einen großen Bereich von Einfallswinkeln im Wesentlichen wieder in dieselbe Richtung zurückwirft, aus der es einfällt.

Des Weiteren wird ein Verfahren zum Messen einer physikalischen Eigenschaft eines mit einem Signierzeichen versehenen Brillenglases bereitgestellt, bei dem ein Mess-Lichtstrahl auf das Brillenglas gerichtet und einem Sensor zugeleitet wird, bei dem weiterhin zum Sichtbarmachen des Signierzeichens ein Befeuchtungs-Lichtstrahl auf das Brillenglas gerichtet wird, der das Brillenglas durchläuft, nach dem Durchlaufen des Brillenglases an einem Reflektor reflektiert wird, das Brillenglas erneut durchläuft, und schließlich als Beobachtungs-Lichtstrahl einer Kamera zugeleitet wird, wobei der Mess-Lichtstrahl von einer ersten Lichtquelle und der Beleuchtungs-Lichtstrahl von einer zweiten Lichtquelle erzeugt wird, die baulich verschiedene Einheiten sind, wobei der Beleuchtungs-Lichtstrahl nach dem Durchlaufen des Brillenglases an einem Retroreflektor reflektiert wird, der einfallendes Licht über einen großen Bereich von Einfallswinkeln im Wesentlichen wieder in dieselbe Richtung zurückwirft, aus der es einfällt, und dass der Retroreflektor bewegt wird.

Des Weiteren wird eine Vorrichtung zum Sichtbarmachen eines Signierzeichens auf einem Brillenglas bereitgestellt, mit einer auf einer ersten Seite des Brillenglases angeordneten Beleuchtungs-Lichtquelle zum Erzeugen eines Beleuchtungs-Lichtstrahles, für eine Erkennung des Signierzeichens; einem auf der der ersten Seite gegenüberliegenden Seite des Brillenglases angeordneten Reflektor; einer Kamera zum Empfangen eines von dem Brillenglas kommenden Beobachtungs-Lichtstrahles; ersten optischen Mitteln zum Führen des Beleuchtungs-Lichtstrahles durch das Brillenglas hindurch; und zweiten optischen Mitteln zum Führen des von dem Reflektor durch das Brillenglas hindurch reflektierten Beobachtungs-Lichtstrahles zu der Kamera, wobei der Reflektor mit einem Antriebsmotor zum Bewegen des Reflektors verbunden ist, und wobei der Reflektor als Retroreflektor ausgebildet ist, der einfallendes Licht über einen großen Bereich von Einfallswinkeln im Wesentlichen wieder in dieselbe Richtung zurückwirft, aus der es einfällt.

Des Weiteren wird eine Vorrichtung zum Messen einer physikalischen Eigenschaft eines mit einem Signierzeichen versehenen Brillenglases bereitgestellt, mit einer auf einer ersten Seite des Brillenglases angeordneten Beleuchtungs-Lichtquelle zum Erzeugen eines Beleuchtungs-Lichtstrahles, für eine Erkennung des Signierzeichens; einem auf der der ersten Seite gegenüberliegenden Seite des Brillenglases angeordneten Reflektor; einer Kamera zum Empfangen eines von dem Brillenglas kommenden BeobachtungsLichtstrahles; ersten optischen Mitteln zum Führen des Beleuchtungs-Lichtstrahles durch das Brillenglas hindurch; zweiten optischen Mitteln zum Führen des von dem Reflektor durch das Brillenglas hindurch reflektierten Beobachtungs-Lichtstrahles zu der Kamera; einer Mess-Lichtquelle zum Erzeugen eines Mess-Lichtstrahles für eine Messung einer physikalischen Eigenschaft des Brillenglases; einem Sensor; und dritten optischen Mitteln zum Führen des Mess-Lichtstrahles von der Mess-Lichtquelle zum Brillenglas und vom Brillenglas zu dem Sensor, wobei die Mess-Lichtquelle und die Beleuchtungs-Lichtquelle sowie die ersten optischen Mittel und die dritten optischen Mittel jeweils baulich verschiedene Einheiten sind, wobei der Reflektor ein Retroreflektor ist, der einfallendes Licht über einen großen Bereich von Einfallswinkeln im Wesentlichen wieder in dieselbe Richtung zurückwirft, aus der es einfällt, und dass der Reflektor mit einem Antriebsmotor zum Bewegen des Reflektors verbunden ist.

Die der Erfindung zugrunde liegende Aufgabe wird auf diese Weise vollkommen gelöst.

Wenn nämlich der als Retroreflektor ausgebildete Reflektor bewegt wird, so wird im Vergleich zum Stand der Technik ein homogener Hintergrund erzeugt, von dem sich die Signierzeichen wesentlich deutlicher und damit kontrastreicher abheben. Die zu prüfenden Brillengläser erscheinen bei der Messung gleichmäßig hell. An den Kanten der Signierzeichen tritt jedoch eine so starke Streuung auf, dass das gestreute Licht nicht mehr die Retroreflexbedingung erfüllt, mit der Folge, dass die Signierzeichen dunkel auf hellem Hintergrund erscheinen. Durch die Bewegung des Retroreflektors verschwimmt dessen Struktur. und es stören Wellen, Inhomogenitäten, Verschmutzungen usw. des Retroreflektors selbst nicht mehr.

Durch die Maßnahme, für den Strahlengang des Mess-Lichtes und des Beleuchtungs-Lichtes unterschiedliche bauliche Komponenten und zumindest teilweise auch unterschiedliche Strahlengänge einzusetzen, lässt sich eine Entkopplung der Vorgänge des Messens physikalischer Eigenschaften des Brillenglases sowie des Erkennens von Signierzeichen auf dem Brillenglas sauber voneinander trennen.

Das erfindungsgemäße Verfahren mit einem bewegten Retroreflektor lässt sich in erfindungsgemäßer Weiterbildung mit einem Scheitelbrechwert-Messgerät kombinieren, so dass man damit die Messung leicht an den Stellen auf dem Brillenglas ausführen kann, deren Lage relativ zu den Signierzeichen auf dem Brillenglas definiert ist. Dazu kombiniert man das erfindungsgemäße Verfahren so mit dem Scheitelbrechwert-Messgerät, dass das Bild der Signierzeichen im Kamerabild eine bestimmte Position einnehmen muss, während man die Messung ausführt. Man verwendet dazu einen Beleuchtungs-Strahlengang und einen Mess-Strahlengang, die sich in der näher ausgeführten Weise optisch entkoppeln lassen, obwohl sie teilweise dieselben Pfade verwenden.

Wenn im Rahmen der vorliegenden Anmeldung von einem "Retroreflektor" die Rede ist, so ist hierunter eine Fläche zu verstehen, die einfallendes Licht über einen großen Bereich von Einfallswinkeln im Wesentlichen wieder in dieselbe Richtung zurückwirft, aus der es einfällt. In der Praxis verwendet man hierfür ebene oder gekrümmte Flächen, die mit einer retroreflektierenden Oberfläche, z.B. Glasperlen, versehen sind, oder auf der viele kleine Tripelspiegel oder verspiegelte Tripelprismen in einer regelmäßigen Anordnung angebracht sind. Derartige Oberflächen sind allgemein von Fahrzeug-Rückreflektoren, Verkehrsschildern, Lichtschranken usw. bekannt. Für das erfindungsgemäße Verfahren ist es vorteilhaft, wenn die einzelnen retroreflektierenden Strukturen auf dem Retroreflektor deutlich kleiner als 1 mm sind.

Bei bevorzugten Ausführungsformen des erfindungsgemäßen Verfahrens wird der Reflektor im Wesentlichen periodisch bewegt, insbesondere rotierend. Alternativ ist aber auch eine Bewegung in einer parallelen Drehtranslation möglich, bei der der Retroreflektor z.B. in einer Ebene verschoben wird und sein Mittelpunkt sich dabei auf einer Kreisbahn bewegt, ohne dass der Retroreflektor im Übrigen gedreht wird. Daneben ist auch eine lineare Bewegung des Retroreflektors möglich.

All diese Bewegungen verlaufen im Wesentlichen quer zur Ausbreitungsrichtung des Beleuchtungs-Lichtstrahles.

Wenn der Reflektor periodisch bewegt wird, besteht eine weitere bevorzugte Ausführungsform der Erfindung darin, die Frequenz dieser periodischen Bewegung des Reflektors an ein Synchronisiersignal der Kamera anzupassen. Insbesondere ist bevorzugt, wenn die Frequenz mit dem Synchronisiersignal drehzahlsynchronisiert, insbesondere phasensynchronisiert wird.

Diese Maßnahme hat den Vorteil, dass die elektronische Auswertung des aus dem Beobachtungs-Lichtstrahl abgeleiteten Videosignals in besonders einfacher Weise möglich ist.

Bei einer weiteren Gruppe von Ausführungsbeispielen wird eine gute Wirkung dadurch erzielt, dass der Reflektor in einem Abstand von 1 cm bis 30 cm vom Brillenglas bewegt wird.

Diese Maßnahme hat den Vorteil, dass sich ein besonders gleichmäßiger Hintergrund durch den bewegten Retroreflektor ergibt.

Eine besonders gute Wirkung wird ferner dann erzielt, wenn ein in der Kamera aus dem Beobachtungs-Lichtstrahl erzeugtes Videosignal durch mindestens eine Faltungsoperation über jeweils endliche Nachbarschaften im Kontrast angehoben wird. Vorzugsweise werden dabei hohe Ortsfrequenzen, z.B. infolge einer differenzierenden Wirkung, stärker angehoben als niedrige Ortsfrequenzen.

Das aus dem Beobachtungs-Lichtstrahl erzeugte Videosignal in der Kamera kann erfindungsgemäß zu verschiedenen Zwecken verwendet werden. Zum einen kann es zum Ermitteln des Signierzeichens mittels Zeichenerkennung dienen. Zum anderen kann es zum Ermitteln einer Position des Brillenglases auf einer Auflage dienen und anschließend zum Ermitteln einer dioptrischen Wirkung des Brillenglases.

Erfindungsgemäß können die verschiedenen Strahlengänge ganz oder streckenweise zusammengelegt werden, um das Verfahren auf möglichst kleinem Raum durchführen zu können.

Bei einer ersten Variante wird der Beleuchtungs-Lichtstrahl in den Strahlengang des Beobachtungs-Lichtstrahles eingekoppelt. Bei einer zweiten Variante wird der Mess-Lichtstrahl in den Strahlengang des Beobachtungs-Lichtstrahles eingekoppelt. Bei einer dritten Variante schließlich wird der Mess-Lichtstrahl in den Strahlengang des Beleuchtungs-Lichtstrahles eingekoppelt.

Dies geschieht bei Ausführungsformen der erfindungsgemäßen Vorrichtung bevorzugt durch entsprechende Strahlenteiler oder sonstige geeignete optische Mittel, beispielsweise durchbohrte Spiegel.

Im Zusammenhang mit den verwendeten Strahlenteilern ist es bevorzugt, eine Lichtfalle für einen durch den Strahlenteiler hindurchtretenden Anteil des jeweiligen Lichtstrahls vorzusehen.

Wenn ein Strahlenteiler zum Einkoppeln des Beleuchtungs-Lichtstrahls in den Strahlengang des Beobachtungs-Lichtstrahles vorgesehen ist, geschieht dies in bevorzugter Weise derart, dass eine Eintrittspupille der Kamera und eine Austrittspupille der Beleuchtungs-Lichtquelle konjugiert zu diesem Strahlenteiler sind.

Erfindungsgemäß ist weiterhin bevorzugt, wenn der Beleuchtungs-Lichtstrahl mindestens im Auftreffbereich des Mess-Lichtstrahles auf dem Brillenglas ausgeblendet wird.

Diese Maßnahme hat den Vorteil, dass Wechselwirkungen vermieden werden, die dadurch auftreten können, dass der Beleuchtungs-Lichtstrahl auf den Sensor fällt, der nur den Mess-Lichtstrahl empfangen sollte.

Dabei ist besonders bevorzugt, wenn der Beleuchtungs-Lichtstrahl als im Querschnitt ringförmiger Lichtstrahl erzeugt wird.

Dies geschieht apparativ bevorzugt dadurch, dass entweder die Beleuchtungsquelle bereits einen im Querschnitt ringförmigen Beleuchtungs-Lichtstrahl erzeugt oder aber dass die Beleuchtungs-Lichtquelle ein Dia mit einem lichtundurchlässigen Punkt im Strahlengang des Beleuchtungs-Lichtstrahles aufweist.

Bei weiteren bevorzugten Ausführungsformen der Erfindung werden der Beleuchtungs-Lichtstrahl und der Mess-Lichtstrahl mit unterschiedlicher Lichtwellenlänge erzeugt.

Auch diese Maßnahme hat den Vorteil, dass beide Lichtstrahlen hinsichtlich der elektronischen Weiterverarbeitung exakt voneinander getrennt werden können.

Bevorzugt werden der Beleuchtungs-Lichtstrahl als rotes Licht und der Mess-Lichtstrahl als grünes Licht erzeugt.

Ferner ist bevorzugt möglich, dass der auf den Sensor fallende Mess-Lichtstrahl durch ein Filter geleitet wird, der für die Lichtwellenlänge des Beleuchtungs-Lichtstrahles als Sperrfilter wirkt.

Auch diese Maßnahme trägt dazu bei, die beiden Strahlengänge voneinander zu trennen.

Der Retroreflektor kann schließlich eben oder gewölbt ausgebildet sein.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1     eine äußerst schematisierte Seitenansicht eines ersten Ausführungsbeispiels einer erfindungsgemäßen Vorrichtung;

Fig. 2     eine ebenfalls schematisierte Seitenansicht eines zweiten Ausführungsbeispiels einer erfindungsgemäßen Vorrichtung, nämlich eines Scheitelbrechwert-Messgeräts, wobei zusätzlich optische Mittel zum Vermessen eines Brillenglases vorgesehen sind;

Fig. 3-Fig. 5     drei Ausführungsformen von Beleuchtungs-Lichtquellen, wie sie bei den Ausführungsformen gemäß Fig. 1 und 2 Verwendung finden können;

Fig. 6     in vergrößertem Maßstab eine Draufsicht auf einen Retroreflektor, wie er bei der Vorrichtung gemäß Fig. 1 verwendet wird, jedoch mit einem Antrieb für eine parallele Drehtransformation;

Fig. 7     eine schematisierte Seitenansicht zur Erläuterung einer weiteren Möglichkeit zur Einkopplung von Beleuchtungslicht.

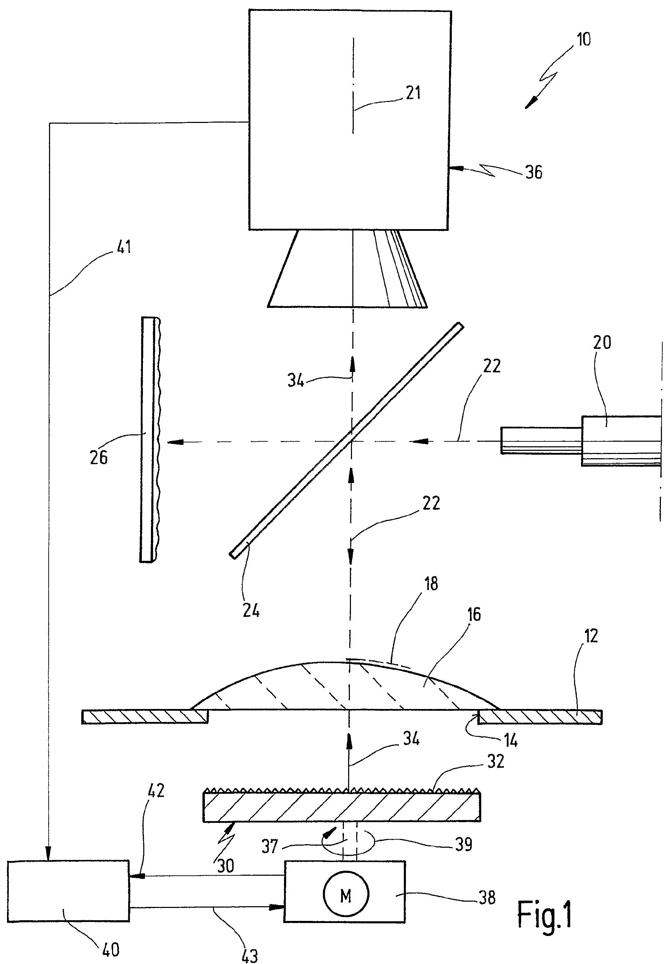

In Fig. 1 bezeichnet 10 insgesamt ein erstes Ausführungsbeispiel einer erfindungsgemäßen Vorrichtung.

In der Vorrichtung 10 ist eine Auflage 12 mit einer zentralen Aussparung 14 vorgesehen. Auf der Auflage 12 und über die Aussparung 14 hinweg befindet sich ein Brillenglas 16. Das Brillenglas 16 ist mit einem bei 18 angedeuteten Signierzeichen versehen.

Eine Beleuchtungs-Lichtquelle 20 ist vorzugsweise senkrecht zur optischen Achse des Brillenglases 16 ausgerichtet, die im dargestellten Beispiel mit der optischen Achse 21 einer Kamera 36 zusammenfällt. Die Beleuchtungs-Lichtquelle 20 sendet einen Beleuchtungs-Lichtstrahl 22 aus. Dieser gelangt auf einen Strahlenteiler 24, beispielsweise einen teildurchlässigen Spiegel, und wird dort in die Richtung der optischen Achse 21 der Kamera 36 reflektiert. Ein durch den Strahlenteiler 24 hindurchtretender Anteil des aus der Beleuchtungs-Lichtquelle 20 austretenden Beleuchtungs-Lichtstrahls 22 wird von einer Lichtfalle 26 absorbiert, die hinter dem Strahlenteiler 24 angeordnet ist.

Der Beleuchtungs-Lichtstrahl 22 durchsetzt das Brillenglas 16 und gelangt auf einen Retroreflektor 30, der in der Darstellung gemäß Fig. 1 unterhalb des Brillenglases 16 angeordnet ist. Der Retroreflektor 30 ist mit einer retroreflektierenden Beschichtung 32 versehen. Er kann auch als handelsübliche Retroreflexfolie oder als Retroreflektor mit regelmäßig angeordneten Tripelspiegeln oder verspiegelten Tripelprismen ausgebildet sein.

Der vom Retroreflektor 30 reflektierte Beleuchtungs-Lichtstrahl 22 durchläuft erneut - in entgegengesetzter Richtung - das Brillenglas 16 und wird dann als Beobachtungs-Lichtstrahl 34 zu der Kamera 36, beispielsweise einer CCD-Kamera geführt. Die Kamera 36 ist auf das Brillenglas 16 fokussiert und erzeugt ein Bild des Brillenglases 16, in dem das Signierzeichen 18 vor dem Hintergrund des Retroreflektors 30 sichtbar ist.

Der Retroreflektor 30 ist über eine nur äußerst schematisch angedeutete Wirkverbindung 37, im dargestellten Beispiel eine Antriebswelle, mit einem Antriebsmotor 38 verbunden. Der Antriebsmotor 38 dreht den Retroreflektor 30 um eine Vertikalachse, die mit der Achse 21 der Kamera 30 sowie mit der Achse des Beleuchtungs-Lichtstrahls 22 vorzugsweise fluchtet. Dies ist in Fig. 1 mit einem Pfeil 39 veranschaulicht.

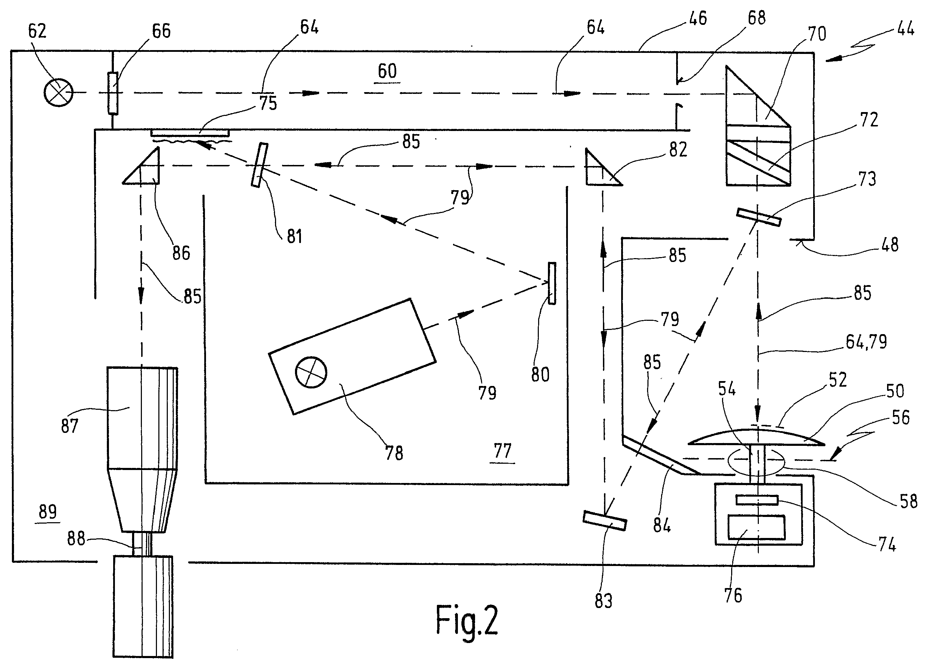

Bei dem in Fig. 1 dargestellten Ausführungsbeispiel ist die retroreflektierende Beschichtung 32 im Bereich der vertikalen Drehachse des Retroreflektors 30 durchgehend ausgebildet. Auf Grund dessen kann unter ungünstigen Umständen im Bereich der Drehachse und einer kleinen kreisförmigen Umgebung darum ein Muster erkennbar bleiben, das jedoch in der Praxis nur wenig stört. Es sei bereits an dieser Stelle darauf hingewiesen, dass der Retroreflektor 30 aus diesem Grunde auch kreisringförmig ausgebildet sein kann, wie dies z.B. beim weiter unten noch erläuterten Ausführungsbeispiel gemäß Fig. 2 der Fall ist.

Anstatt den Retroreflektor 30 als Ganzes um eine Vertikalachse zu drehen, kann man ihn auch linear und quer zur Achse 21 oszillieren lassen. Wenn dabei Retroreflektoren mit einem gleichmäßigen Muster der retroreflektierenden Elemente verwendet werden, muss in diesem Fall darauf geachtet werden, dass eine geeignete Richtung der linearen Oszillationsbewegung zu dem Muster eingestellt wird.

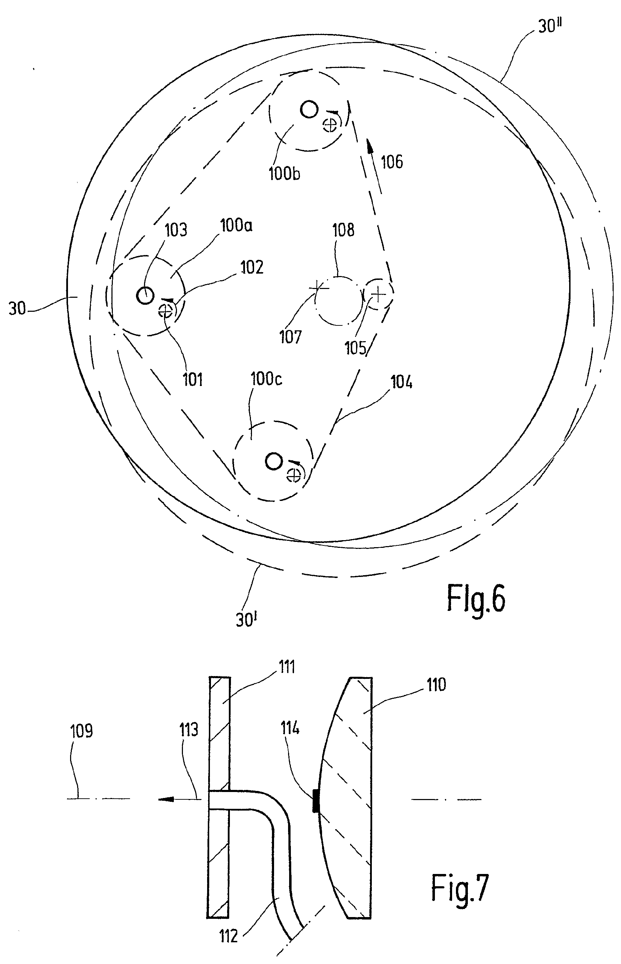

Schließlich ist in einer weiteren Variante auch möglich, den Retroreflektor 30 in einer parallelen Drehtranslation zu bewegen, ähnlich der Schwingbewegung eines Schleiftellers einer Schwingschleifmaschine. Ein entsprechender Antriebsmechanismus für diesen Anwendungsfall ist in Fig. 6 dargestellt und wird weiter unten noch im Einzelnen erläutert.

Insgesamt kommt es bei der Bewegung des Retroreflektors 30 wesentlich darauf an, dass sich dabei die regelmäßigen Strukturen des Retroreflektors 30 und ein ggf. darauf anhaftender Schmutz als Bewegungsunschärfe verwischen. Es wurde bereits erwähnt, dass die Hauptkomponente der Bewegung des Retroreflektors 30 im Wesentlichen quer zur optischen Achse 21 der Kamera 36 verlaufen sollte.

Für die retroreflektierende Beschichtung 32 des Retroreflektors 30 wird vorzugsweise ein gleichmäßiges Muster von Einzelelementen verwendet, z.B. regelmäßig angeordnete Tripelprismen oder Tripelspiegel. Dann ist es sinnvoll, die Bewegung des Retroreflektors 30 mit Vertikal-Synchronimpulsen der Kamera 36 zu verkoppeln.

Hierzu wird die in Fig. 1 dargestellte Beschaltung eingesetzt. Die Beschaltung besteht aus einem elektronischen Steuergerät 40, das über eine erste Leitung 41 an die Kamera 36 und über eine zweite Leitung 42 an den Antriebsmotor 38 angeschlossen ist. Das elektronische Steuergerät 40 gibt seinerseits über eine dritte Leitung 43 Steuerbefehle an den Antriebsmotor 38 ab.

Über die erste Leitung 41 werden die vertikalen Synchronimpulse der Kamera 36 zum elektronischen Steuergerät 40 übertragen. Der Motor 38 liefert über die zweite Leitung 42 Encoderimpulse, die im elektronischen Steuergerät 40 mit den vertikalen Synchronimpulsen verglichen werden. Aus diesem Vergleich wird ein Steuersignal für den Strom oder die Spannung des Antriebsmotors 38 abgeleitet, das über die dritte Leitung 43 übertragen wird. Die Regelung kann dabei eine Drehzahlsynchronisierung bewirken, das heißt, dass die Drehzahl des Antriebsmotors 38 an die Frequenz der vertikalen Synchronimpulse angepasst wird. Besonders bevorzugt ist jedoch darüber hinaus eine phasenstarre Kopplung, so dass auch eine vorbestimmte Phasenlage zwischen der periodischen Bewegung des Antriebsmotors 38 (beispielsweise der Drehbewegung) und den vertikalen Synchronimpulsen der Kamera 36 sichergestellt ist.

Durch die Verwendung eines bewegten Retroreflektors 30 wird erreicht, dass der Hintergrund, vor dem das Brillenglas 16 in der Kamera 36 abgebildet wird, homogen ist. Man vermeidet daher den Nachteil bekannter Anordnungen, bei denen dem zu erkennenden Signierzeichen noch eine andere unscharfe Struktur überlagert ist, die sogar die Größenordnung des zu erkennenden Signierzeichens haben kann. Wenn man hingegen den Retroreflektor 30 in der beschriebenen Weise bewegt, kann man bei der Bildverarbeitung ein homogenes Grundbild abziehen. Dies ist bei bekannten Vorrichtungen schon deswegen nicht möglich, weil das inhomogene Hintergrundmuster bei unterschiedlich gewölbten Brillengläsern in unterschiedlicher Größe abgebildet wird.

Besonders vorteilhaft ist es bei der Beobachtung des kontrastierten Bildes, wenn man das Videosignal der Kamera 36 zusätzlich über eine Kontrastierungseinrichtung laufen lässt. Diese führt z.B. eine lokale Faltungsoperation auf den Grauwerten mit einer Kernfunktion aus, die in mehrere Richtungen differenzierenden Charakter hat. Man berechnet damit für jedes Pixel P[ij] die Summe

$$A[i,j] = c * \sum_{ii,jj=1..n} P[i-ii, j-jj] * K[ii,jj]$$

und zeigt die Anzeigewerte A[i, j] an oder man verarbeitet diese z.B. in einer Mustererkennung weiter. Dabei ist n die Kernlänge (z.B. n = 3) und c ist ein geeigneter Normierungsfaktor. Ein geeigneter Faltungskern ist z.B.:

$$K[ii,jj] = \begin{pmatrix} -1 & 0 & -1 \\ 0 & 4 & 0 \\ -1 & 0 & -1 \end{pmatrix}$$

oder

$$K[ii,jj] = \begin{pmatrix} 0 & -1 & 0 \\ -1 & 4 & -1 \\ 0 & -1 & 0 \end{pmatrix}$$

oder

$$K[ii,jj] = \begin{pmatrix} -1 & -1 & -1 \\ -1 & 8 & -1 \\ -1 & -1 & -1 \end{pmatrix}$$

Die Kontrastierungsfunktion kann man beispielsweise mit einem Universalrechner fortlaufend berechnen und das (an den Rändern des Bildbereichs jeweils um eine Kernlänge verkürzte) Bild anzeigen. Es ist sogar leicht möglich, eine solche Kontrastierung ohne einen Rechner in Hardware zu implementieren und das Ergebnis in Echtzeit auf einem Video-Bildschirm anzuzeigen. Hierzu benötigt man einen Videodigitalisierer und so viele Verzögerungsleitungen, wie der Faltungskern Zeilen hat (in der obigen Notation also n) und einen sog. Convolver-Chip, wie er beispielsweise kommerziell von der Firma Plessey unter der Bezeichnung PDSP 16488 erhältlich ist.

Beim Ausführungsbeispiel gemäß Fig. 2 bezeichnet 44 eine Vorrichtung, nämlich ein Scheitelbrechwert-Messgerät, mit einem lichtdichten Gehäuse 46.

In Fig. 2 ist nur ein Signierzeichen 52 abgebildet. In der Realität sind jedoch zwei Signierzeichen vorgesehen, die sich im vorgegebenen Abstand oberhalb bzw. unterhalb der Zeichenebene befinden. Diese beiden Signierzeichen definieren mit ihrer Lage diejenige Stelle eines Brillenglases 50, an der eine physikalische Eigenschaft, z.B. die Brechkraft des Brillenglases 50, gemessen werden soll. Auf diese Stelle wird ein Mess-Lichtstrahl 64 gerichtet. Zu diesem Zweck wird das Brillenglas 50 von einem Bediener auf eine rohrförmige Auflage 54 aufgelegt und dort relativ zu den Signierzeichen 52 manuell ausgerichtet. Es kann sich dabei um ein handelsübliches Scheitelbrechwert-Messgerät handeln. Bei diesem wird das Brillenglas 50 bei der Messung so positioniert, dass die kontrastiert angezeigten Signierzeichen 52 im Kamerabild an einer vorgegebenen Stelle liegen. Die Signierzeichen 52 liegen somit nicht an der Messstelle selbst, sondern in einer bestimmten geometrischen Relation dazu.

Das Gehäuse 46 weist lediglich auf der in Fig. 2 rechten Seite eine von außen zugängliche Aussparung 48 auf. In dieser Aussparung 48 befindet sich eine Aufnahme für das Brillenglas 50, das mit den Signierzeichen 52 versehen ist.

Unterhalb des Brillenglases 50 befindet sich ein hier nur schematisch angedeuteter, kreisringförmiger Retroreflektor 56, der mittels (nicht dargestellter) Antriebsmittel drehbar ist, wie mit einem Pfeil 58 angedeutet. Insofern gilt das Gleiche, was weiter oben zum Ausführungsbeispiel gemäß Fig. 1 erläutert wurde.

Im Gehäuse 46 befindet sich eine obere Kammer 60, an deren linkem Ende eine Mess-Lichtquelle 62 angeordnet ist. Die Mess-Lichtquelle 62 sendet einen Mess-Lichtstrahl 64 aus. Dieser läuft zunächst durch ein erstes Farbfilter 66 und dann durch eine Blende 68, ehe er in einem Prisma 70 oder einem entsprechenden Spiegel nach unten umgelenkt wird. Der Mess-Lichtstrahl 64 läuft dann durch einen Prismenkompensator 72 sowie durch ein Loch in einem durchbohrten Spiegel 73 und trifft dann auf die Oberseite des Brillenglases 50 auf. Er durchläuft das Brillenglas 50 sowie die Auflage 54 und durchsetzt dann ein in bevorzugter Weiterbildung der Erfindung vorgesehenes zweites Farbfilter 74, ehe er auf einen Sensor 76 trifft.

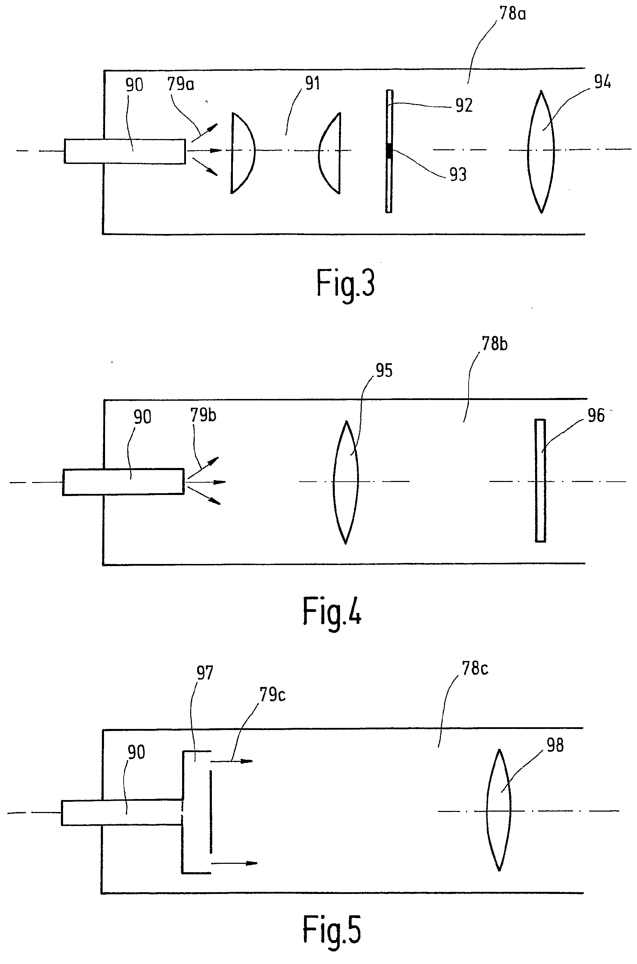

In einer zentralen Kammer 77 des Gehäuses 46 befindet sich eine Beleuchtungs-Lichtquelle 78, von der drei Ausführungsbeispiele weiter unten an Hand der Fig. 3 bis 5 noch erläutert werden.

Die Beleuchtungs-Lichtquelle 78 sendet einen Beleuchtungs-Lichtstrahl 79 aus. Dieser gelangt zunächst auf einen Umlenkspiegel 80 und dann auf einen als Strahlenteiler 81 wirkenden halbdurchlässigen Spiegel. Ein durch den Strahlenteiler 81 hindurchtretender Anteil des Beleuchtungs-Lichtstrahls 79 wird in einer Lichtfalle 75 absorbiert, die hinter dem Strahlenteiler 81 angeordnet ist. Der Beleuchtungs-Lichtstrahl 79 wird im Wesentlichen jedoch von dem Strahlenteiler 81 nach rechts umgelenkt, um dann auf ein Prisma 82 oder einen Spiegel zu treffen, der den Beleuchtungs-Lichtstrahl 79 nach unten umlenkt. Nach erneuter Umlenkung durch einen Umlenkspiegel 83 läuft der Beleuchtungs-Lichtstrahl 79 durch ein Fenster 84 der Aussparung 48 und trifft auf den durchbohrten Spiegel 73, der den Beleuchtungs-Lichtstrahl 79 wiederum nach unten umlenkt, wo er auf das Brillenglas 50 trifft und das Signierzeichen 52 beleuchtet.

Der vom Brillenglas 50 bzw. dem Signierzeichen 52 reflektierte Beleuchtungs-Lichtstrahl 79 bildet nun einen Beobachtungs-Lichtstrahl 85, der zunächst nach oben verläuft und dann über den durchbohrten Spiegel 73, den Umlenkspiegel 83, das Prisma 82 und den Strahlenteiler 81 auf ein weiteres Prisma 86 oder einen entsprechenden Spiegel gelangt, der den Beobachtungs-Lichtstrahl 85 nach unten umlenkt, wo er über ein Objektiv 87 zu einer CCD-Kamera 88 gelangt. Das Prisma 86, das Objektiv 87 und die CCD-Kamera 88 befinden sich in einer linken Kammer 89 des Gehäuses 46.

Die Eintrittspupille des Objektivs 87 und die Austrittspupille der Beleuchtungs-Lichtquelle 78 sind bezüglich des Strahlenteilers 81 zueinander konjugiert.

Die Vorrichtung 44 gemäß Fig. 2 arbeitet wie folgt:

In einem Messzweig wird der Mess-Lichtstrahl 64 von der Mess-Lichtquelle 62 in der beschriebenen Weise auf das Brillenglas 50 eingestrahlt, durchsetzt dieses und gelangt auf den Sensor 76. Auf diese Weise können physikalische Eigenschaften des Brillenglases gemessen werden. Zur besseren Unterscheidung vom Beleuchtungs-Lichtstrahl 79 bzw. vom Beobachtungs-Lichtstrahl 85 wird, der Mess-Lichtstrahl 64 mit einer anderen Lichtwellenlänge ausgestrahlt, beispielsweise als grünes Licht. Hierzu ist das erste Farbfilter 66 als Grünfilter ausgestaltet. Das zweite Farbfilter 74 vor dem Sensor 76 hat demgegenüber die Funktion eines Sperrfilters, das andere Lichtwellenlängen, insbesondere die der Beleuchtungs-Lichtquelle 78, nicht durchlässt. Auf diese Weise wird verhindert, dass anderes Licht außer dem Mess-Lichtstrahl 64 auf den Sensor 76 gelangt.

Gleichzeitig wird über die Beleuchtungs-Lichtquelle 78 der Beleuchtungs-Lichtstrahl 79 in der beschriebenen Weise auf das Brillenglas 50 gerichtet, um dort das Signierzeichen 52 zu beleuchten. Das reflektierte Bild des Signierzeichens 52 gelangt dann als Beobachtungs-Lichtstrahl 85 zur CCD-Kamera 88 und wird von dort als Videosignal ausgewertet.

Während dies geschieht, wird der Retroreflektor 56 unterhalb des Brillenglases 50 bewegt (Pfeil 58) und zwar in der bereits beschriebenen Weise, nämlich um die Auflage 54 herum rotierend oder in paralleler Drehtranslation.

Die Frequenz einer der vorgenannten periodischen Bewegungen des Retroreflektors 56 wird dabei wiederum so gewählt, dass sie an eine Auslesefrequenz der Kamera 88 angepasst ist.

Auch hier versteht sich, dass eine weitere Kontrastierung durch Faltungsoperationen der oben erläuterten Art bewirkt werden kann.

Über die Auswertung des Videosignales der CCD-Kamera 88 kann alternativ oder zusätzlich zum Sensor 76 auch eine Messung eines physikalischen Parameters des Brillenglases 50 vorgenommen werden.

Im Allgemeinen wird jedoch angestrebt, den Messzweig einerseits und den Beleuchtungs-/Beobachtungszweig andererseits voneinander zu entkoppeln.

Hierzu ist die Beleuchtungs-Lichtquelle 78 vorzugsweise so ausgebildet, wie dies in drei Ausführungsbeispielen in den Fig. 3 bis 5 dargestellt ist.

Allen drei Ausführungsbeispielen gemäß den Fig. 3 bis 5 ist gemein, dass das Licht über einen Lichtleiter 90 zugeführt wird. Selbstverständlich schließt dies nicht aus, dass das Licht statt dessen auch in der Beleuchtungs-Lichtquelle 78 selbst erzeugt werden kann, beispielsweise durch einen Laser, eine Laserdiode, eine LED oder dgl. mehr.

Beim Ausführungsbeispiel gemäß Fig. 3 strahlt in der Beleuchtungs-Lichtquelle 78a der Lichtleiter 90 den Beleuchtungs-Lichtstrahl 79a aus, der an dieser Stelle ein divergierender Lichtstrahl ist. Mittels einer nachgeordneten Kollimationsoptik 91 wird der Beleuchtungs-Lichtstrahl 79a parallelisiert und gelangt nun auf ein transparentes Dia 92, das lediglich im Bereich der optischen Achse einen zentralen schwarzen Fleck 93 aufweist. Über eine Abbildungsoptik 94 wird der Beleuchtungs-Lichtstrahl 79a nun auf den Umlenkspiegel 80 (Fig. 2) gerichtet.

Durch die Abbildung des zentralen schwarzen Flecks 93 auf der Oberfläche des Brillenglases 50 wird erreicht, dass in die zur optischen Messung verwendete Öffnung der rohrförmigen Auflage 54 kein Beleuchtungs-Licht eindringt. Dies ist genau der Bereich, in dem der Mess-Lichtstrahl 64 auf das Brillenglas 50 auftrifft. Auf diese Weise wird also verhindert, dass Beleuchtungs-Licht durch das Brillenglas 50 hindurch auf den Sensor 76 fällt.

Wie bereits erwähnt wurde, kann vor dem Sensor 76 noch das zweite Farbfilter 74 vorgesehen sein, das für die Lichtwellenlänge des Beleuchtungs-Lichtes als Sperrfilter wirkt. Wenn das Mess-Licht beispielsweise grünes Licht ist, so kann das Beleuchtungs-Licht vorzugsweise rotes Licht sein.

Beim zweiten Ausführungsbeispiel gemäß Fig. 4 weist die Beleuchtungs-Lichtquelle 78b hinter dem Austritt des Lichtleiters 90 ebenfalls eine Kollimationsoptik 95 für den divergierenden Beleuchtungs-Lichtstrahl 79b auf. In diesem Falle ist der Kollimationsoptik 95 ein Farbfilter 96 vorgeschaltet, das beispielsweise in der vorstehend beschriebenen Weise ein Rotfilter sein kann.

Beim dritten Ausführungsbeispiel gemäß Fig. 5 ist schließlich in der Beleuchtungs-Lichtquelle 78c am freien Ende des Lichtleiters 90 ein Ring-Austritt 97 vorgesehen, der einen im Querschnitt ringförmigen Beleuchtungs-Lichtstrahl 79c erzeugt. Dieser wird über eine Abbildungsoptik 98 auf den Umlenkspiegel 80 gerichtet.

Auch hier entsteht, ähnlich wie beim Ausführungsbeispiel gemäß Fig. 3, ein zentraler abgeschatteter Bereich, in dem kein Beleuchtungs-Licht auf die Oberfläche des Brillenglases 50 fällt und in dem das Mess-Licht durch das Brillenglas 50 auf den Sensor 76 geleitet werden kann.

Fig. 6 veranschaulicht die Erzeugung einer parallelen Drehtranslation, z.B. des Retroreflektors 30. Zu diesem Zweck sind z.B. drei Exzenterscheiben 100a, 100b und 100c vorgesehen, die sich unterhalb des Retroreflektors 30 befinden. Die Exzenterscheiben 100a, 100b, 100c sind jeweils um eine erste Achse 101 raumfest drehbar gelagert, wie mit einem Pfeil 102 angedeutet.

Im jeweils gleichen Abstand von der Achse 101 sind die Exzenterscheiben 100a, 100b, 100c mit einer zweiten Achse 103 an dem Retroreflektor 30 gelagert, wobei die Achsen 101 und 103 parallel verlaufen. Wenn die Exzenterscheiben 100a, 100b, 100c z.B. mittels eines umlaufenden Riemens 104 von einer gemeinsamen Antriebswelle 105 oder einem gemeinsamen Reibrad gleichphasig angetrieben werden (Pfeil 106), wird der Retroreflektor 30 in eine Taumelbewegung versetzt, wie mit 30' und 30'' angedeutet.

Bei dieser Taumelbewegung bewegt sich der Mittelpunkt 107 des Retroreflektors 30 auf einer Kreisbahn 108, deren Radius gleich der Exzentrizität, d.h. gleich dem Abstand zwischen den Achsen 101 und 103 ist. Damit bewegt sich jeder Punkt auf der Oberfläche des Retroreflektors 30 ebenfalls auf einer solchen Kreisbahn.

Die Exzenterscheiben 100a, 100b, 100c können zum Ausgleich der Unwucht mit entsprechenden Ausgleichsmassen versehen sein. Das Ausmaß der Exzentrizität richtet sich in erster Linie nach der Periodizität der Bewegung des Retroreflektors 30.

Es versteht sich, dass der in Fig. 6 dargestellte Antrieb nur beispielhaft zu verstehen ist und dass z.B. auch eine andere Anzahl von Exzenterscheiben verwendet werden kann. Auch können andere Antriebe eingesetzt werden, wie sie z.B. von Schwingschleifern bekannt sind.

Fig. 7 zeigt schließlich noch eine Variante, bei der ohne Strahlenteiler (vgl. 24 in Fig. 1 bzw. 81 in Fig. 2) gearbeitet wird.

Zu diesem Zweck wird die Beleuchtungsquelle zentral vor dem Kameraobjektiv angeordnet. In dem dargestellten Beispiel ist quer zur Achse 109 vor dem Kameraobjektiv 110 eine planparallele Glasplatte 111 angeordnet, die zentrisch das Ende einer Lichtleitfaser 112 trägt. Aus der Lichtleitfaser 112 tritt der Beleuchtungs-Lichtstrahl 113 aus. Um zu vermeiden, dass Licht direkt in die Kamera zurückfällt, wird ein kleiner Bereich 114 auf dem Kameraobjektiv 110 geschwärzt.

## Patentansprüche

1. Verfahren zum Sichtbarmachen eines Signierzeichens (18; 52) auf einem Brillenglas (16; 50), bei dem ein Beleuchtungs-Lichtstrahl (22; 79) auf das Brillenglas (16; 50) gerichtet wird, der das Brillenglas (16; 50) durchläuft, nach dem Durchlaufen des Brillenglases (16; 50) an einem bewegten Reflektor (30; 56) reflektiert wird, das Brillenglas (16; 50) erneut durchläuft, und schließlich als BeobachtungsLichtstrahl (34; 85) einer Kamera (36; 88) zugeleitet wird, **dadurch gekennzeichnet, dass** der Reflektor (30; 56) als Retroreflektor ausgebildet ist, der einfallendes Licht über einen großen Bereich von Einfallswinkeln im Wesentlichen wieder in dieselbe Richtung zurückwirkt, aus der es einfällt.

2. Verfahren nach Anspruch 1, **dadurch gekennzeichnet, dass** ferner zum Messen einer physikalischen Eigenschaft des Brillenglases (50) ein Mess-Lichtstrahl (64) auf das Brillenglas (50) gerichtet und dann einem Sensor (76) zugeleitet wird, und dass der Mess-Lichtstrahl (64) von einer ersten Lichtquelle (62) und der Beleuchtungs-Lichtstrahl (79) von einer zweiten Lichtquelle (78) erzeugt wird, die baulich verschiedene Einheiten sind.

3. Verfahren zum Messen einer physikalischen Eigenschaft eines mit einem Signierzeichen (52) versehenen Brillenglases (50), bei dem ein Mess-Lichtstrahl (64) auf das Brillenglas (50) gerichtet und einem Sensor (76) zugeleitet wird, bei dem weiterhin zum Sichtbarmachen des Signierzeichens (52) ein Beleuchtungs-Lichtstrahl (79) auf das Brillenglas (50) gerichtet wird, der das Brillenglas (50) durchläuft, nach dem Durchlaufen des Brillenglases (50) an einem Reflektor (56) reflektiert wird, das Brillenglas (50) erneut durchläuft, und schließlich als BeobachtungsLichtstrahl (85) einer Kamera (88) zugeleitet wird, **dadurch gekennzeichnet, dass** der Mess-Lichtstrahl (64) von einer ersten Lichtquelle (62) und der BeleuchtungsLichtstrahl (79) von einer zweiten Lichtquelle (78) erzeugt wird, die baulich verschiedene Einheiten sind, wobei der Beleuchtungs-Lichtstrahl (79) nach dem Durchlaufen des Brillenglases (50) an einem Retroreflektor (56) reflektiert wird, der einfallendes Licht über einen großen Bereich von Einfallswinkeln im Wesentlichen wieder in dieselbe Richtung zurückwirft, aus der es einfällt, und dass der Retroreflektor (56) bewegt (58) wird.

4. Verfahren nach einem oder mehreren der Ansprüche 1 bis 3, **dadurch gekennzeichnet, dass** der Reflektor (30; 56) im Wesentlichen quer zur Ausbreitungsrichtung des Beleuchtungs-Lichtstrahles (22; 79) bewegt (42; 58) wird.

5. Verfahren nach Anspruch 4, **dadurch gekennzeichnet, dass** der Reflektor (30; 56) im wesentlichen periodisch bewegt wird.

6. Verfahren nach Anspruch 5, **dadurch gekennzeichnet, dass** der Reflektor (30; 60) rotierend bewegt wird.

7. Verfahren nach Anspruch 5, **dadurch gekennzeichnet, dass** der Reflektor (30; 56) in einer parallelen Drehtranslation bewegt wird.

8. Verfahren nach Anspruch 4, **dadurch gekennzeichnet, dass** der Reflektor (30; 56) im Wesentlichen linear bewegt wird.

9. Verfahren nach einem oder mehreren der Ansprüche 5 bis 8, **dadurch gekennzeichnet, dass** die Frequenz der periodischen Bewegung des Reflektors (30; 56) an ein Synchronisiersignal der Kamera (36; 88) angepasst wird.

10. Verfahren nach Anspruch 9, **dadurch gekennzeichnet, dass** die Frequenz mit dem Synchronisiersignal drehzahlsynchronisiert wird.

11. Verfahren nach Anspruch 10, **dadurch gekennzeichnet, dass** die Frequenz mit dem Synchronisiersignal phasensynchronisiert wird.

12. Verfahren nach einem oder mehreren der Ansprüche 4 bis 11, **dadurch gekennzeichnet, dass** der Reflektor (30; 56) in einem Abstand von 1 cm bis 30 cm vom Brillenglas (16; 50) bewegt wird.

13. Verfahren nach einem oder mehreren der Ansprüche 1 bis 12, **dadurch gekennzeichnet, dass** ein in der Kamera (36; 88) aus dem Beobachtungs-Lichtstrahl (34; 85) erzeugtes Videosignal durch mindestens eine Faltungsoperation über jeweils endliche Nachbarschaften im Kontrast angehoben wird.

14. Verfahren nach Anspruch 13, **dadurch gekennzeichnet, dass** hohe Ortsfrequenzen, z.B. infolge einer differenzierenden Wirkung, stärker angehoben werden als niedrige Ortsfrequenzen.

15. Verfahren nach einem oder mehreren der Ansprüche 1 bis 14, **dadurch gekennzeichnet, dass** das Signierzeichen (18; 52) mittels Zeichenerkennung aus einem in der Kamera (36; 88) aus dem Beobachtungs-Lichtstrahl (34; 85) erzeugten Video-signal ermittelt wird.

16. Verfahren nach einem oder mehreren der Ansprüche 1 bis 15, **dadurch gekennzeichnet, dass** eine Position des Brillenglases (16; 50) auf einer Auflage (12; 54) aus einem in der Kamera (36; 88) aus dem Beobachtungs-Lichtstrahl (34; 85) erzeugten Videosignal ermittelt wird.

17. Verfahren nach einem oder mehreren der Ansprüche 1 bis 16, **dadurch gekennzeichnet, dass** eine dioptrische Wirkung des Brillenglases (16; 50) aus einem in der Kamera (36; 88) erzeugten Videosignal ermittelt wird.

18. Verfahren nach einem oder mehreren der Ansprüche 1 bis 17, **dadurch gekennzeichnet, dass** der Beleuchtungs-Lichtstrahl (22; 79) in den Strahlengang des Beobachtungs-Lichtstrahles (34; 85) eingekoppelt wird.

19. Verfahren nach einem oder mehreren der Ansprüche 2 bis 18, **dadurch gekennzeichnet, dass** der Mess-Lichtstrahl (64) in den Strahlengang des Beobachtungs-Lichtstrahles (85) eingekoppelt wird.

20. Verfahren nach einem oder mehreren der Ansprüche 2 bis 19, **dadurch gekennzeichnet, dass** der Mess-Lichtstrahl (64) in den Strahlengang des Beleuchtungs-Lichtstrahles (79) eingekoppelt wird.

21. Verfahren nach Anspruch 20, **dadurch gekennzeichnet, dass** der Beleuchtungs-Lichtstrahl (79) mindestens im Auftreffbereich des Mess-Lichtstrahles (64) auf dem Brillenglas (50) ausgeblendet wird.

22. Verfahren nach Anspruch 21, **dadurch gekennzeichnet, dass** der Beleuchtungs-Lichtstrahl (79a, 79c) als im Querschnitt ringförmiger Lichtstrahl erzeugt wird.

23. Verfahren nach einem oder mehreren der Ansprüche 2 bis 22, **dadurch gekennzeichnet, dass** der Beleuchtungs-Lichtstrahl (79) und der Mess-Lichtstrahl (64) mit unterschiedlicher Lichtwellenlänge erzeugt werden.

24. Verfahren nach Anspruch 23, **dadurch gekennzeichnet, dass** der Befeuchtungs-Lichtstrahl (79) als rotes Licht und der Mess-Lichtstrahl (64) als grünes Licht erzeugt werden.

25. Verfahren nach Anspruch 23 oder 24, **dadurch gekennzeichnet, dass** der auf den Sensor (76) fallende Mess-Lichtstrahl (64) durch ein Filter (74) geleitet wird, der für die Lichtwellenlänge des Beleuchtungs-Lichtstrahles (79) als Sperrfilter wirkt.

26. Vorrichtung zum Sichtbarmachen eines Signierzeichens (18; 52) auf einem Brillenglas (16; 50), mit

   - einer auf einer ersten Seite des Brillenglases (16; 50) angeordneten Beleuchtungs-Lichtquelle (20; 78) zum Erzeugen eines Beleuchtungs-Lichtstrahles (22; 79), für eine Erkennung des Signierzeichens (18; 52);
   - einem auf der der ersten Seite gegenüberliegenden Seite des Brillenglases (16; 50) angeordneten Reflektor (30; 56);

   - einer Kamera (36; 87) zum Empfangen eines von dem Brillenglas (16; 50) kommenden Beobachtungs-Lichtstrahles (34; 85);
   - ersten optischen Mitteln (24; 73, 80, 81, 82, 83) zum Führen des Beleuchtungs-Lichtstrahles (22; 79) durch das Brillenglas (16; 50) hindurch; und
   - zweiten optischen Mitteln (82, 83, 85, 86) zum Führen des von dem Reflektor (30; 56) durch das Brillenglas (16; 50) hindurch reflektierten Beobachtungs-Lichtstrahles (34; 85) zu der Kamera (36; 87),

   **dadurch gekennzeichnet, dass** der Reflektor (30; 56) mit einem Antriebsmotor (40) zum Bewegen (42; 58) des Reflektors (30; 56) verbunden ist, und wobei der Reflektor (30; 56) als Retroreflektor ausgebildet ist, der einfallendes Licht über einen großen Bereich von Einfallswinkeln im Wesentlichen wieder in dieselbe Richtung zurückwirft, aus der es einfällt.

27. Vorrichtung nach Anspruch 26, **dadurch gekennzeichnet, dass** ferner vorgesehen sind:

   - eine von der Beleuchtungs-Lichtquelle (78) baulich verschiedene Mess-Lichtquelle (62) zum Erzeugen eines Mess-Lichtstrahls (64) für eine Messung einer physikalischen Eigenschaft des Brillenglases (50);
   - ein Sensor (76);
   - dritte optische Mittel (54, 66, 68, 70, 72) zum Führen des Mess-Lichtstrahles (64) von der Mess-Lichtquelle (62) zum Brillenglas (50) und vom Brillenglas (50) zu dem Sensor (76).

28. Vorrichtung zum Messen einer physikalischen Eigenschaft eines mit einem Signierzeichen (52) versehenen Brillenglases (50), mit

   - einer auf einer ersten Seite des Brillenglases (50) angeordneten Beleuchtungs-Lichtquelle (78) zum Erzeugen eines Beleuchtungs-Lichtstrahles (79), für eine Erkennung des Signierzeichens (52);
   - einem auf der der ersten Seite gegenüberliegenden Seite des Brillenglases (50) angeordneten Reflektor (56);
   - einer Kamera (87) zum Empfangen eines von dem Brillenglas (50) kommenden Beobachtungs-Lichtstrahles (85);
   - ersten optischen Mitteln (73, 80, 81, 82, 83) zum Führen des Beleuchtungs-Lichtstrahles (79) durch das Brillenglas (50) hindurch;
   - zweiten optischen Mitteln (82, 83, 85, 86) zum Führen des von dem Reflektor (56) durch das Brillenglas (50) hindurch reflektierten Beobachtungs-Lichtstrahles (85) zu der Kamera (87);
   - einer Mess-Lichtquelle (62) zum Erzeugen eines Mess-Lichtstrahles (64) für eine Messung einer physikalischen Eigenschaft des Brillenglases (50);
- einem Sensor (76); und
- dritten optischen Mitteln (54, 66, 68, 70, 72) zum Führen des Mess-Lichtstrahles (64) von der Mess-Lichtquelle (62) zum Brillenglas (50) und vom Brillenglas (50) zu dem Sensor (76).

**dadurch gekennzeichnet, dass** die Mess-Lichtquelle (62) und die Beleuchtungs-Lichtquelle (78) sowie die ersten optischen Mittel (73, 80, 81, 82, 83) und die dritten optischen Mittel (54, 66, 68, 70, 72) jeweils baulich verschiedene Einheiten sind, wobei der Reflektor (56) ein Retroreflektor ist, der einfallendes Licht über einen großen Bereich von Einfallswinkeln im Wesentlichen wieder in dieselbe Richtung zurückwirft, aus der es einfällt, und dass der Reflektor (56) mit einem Antriebsmotor (40) zum Bewegen (58) des Reflektors (56) verbunden ist.

29. Vorrichtung, insbesondere nach einem oder mehreren der Ansprüche 26 bis 28, **dadurch gekennzeichnet, dass** ein Strahlenteiler (24; 81) zum Einkoppeln des Beleuchtungs-Lichtstrahls (22; 79) in den Strahlengang des Beobachtungs-Lichtstrahles (34; 85) vorgesehen ist.

30. Vorrichtung nach Anspruch 29, **dadurch gekennzeichnet, dass** eine Lichtfalle (76; 75) für einen durch den ersten Strahlenteiler (24; 81 hindurchtretenden Anteil des Beleuchtungs-Lichtstrahls (22; 79) vorgesehen ist.

31. Vorrichtung nach Anspruch 29 oder 30, **dadurch gekennzeichnet, dass** eine Eintrittspupille der Kamera (36; 88) und eine Austrittspupille der Beleuchtungs-Lichtquelle (20; 78) konjugiert zum Strahlenteiler (81) angeordnet sind.

32. Vorrichtung nach einem oder mehreren der Ansprüche 27 bis 31, **dadurch gekennzeichnet, dass** ein optisches Mittel (73) zum Einkoppeln des Mess-Lichtstrahls (64) in den Strahlengang des Beobachtungs-Lichtstrahles (85) vorgesehen ist.

33. Vorrichtung nach einem oder mehreren der Ansprüche 27 bis 32, **dadurch gekennzeichnet, dass** ein optisches Mittel (73) zum Einkoppeln des Mess-Lichtstrahls (64) in den Strahlengang des Beleuchtungs-Lichtstrahles (79) vorgesehen ist.

34. Vorrichtung nach Anspruch 33, **dadurch gekennzeichnet, dass** die Beleuchtungs-Lichtquelle (78) Mittel aufweist, die den Beleuchtungs-Lichtstrahl (79) mindestens im Auftreffbereich des Mess-Lichtstrahles (64) auf dem Brillenglas (50) ausblenden.

35. Vorrichtung nach Anspruch 34, **dadurch gekennzeichnet, dass** die Beleuchtungsquelle (78) einen im Querschnitt ringförmigen Beleuchtungs-Lichtstrahl (79c) erzeugt.

36. Vorrichtung nach Anspruch 34 oder 35, **dadurch gekennzeichnet, dass** die Beleuchtungs-Lichtquelle (78) ein Dia (92) mit einem lichtundurchlässigen Fleck (93) im Strahlengang des Beleuchtungs-Lichtstrahles (79a) aufweist.

37. Vorrichtung nach einem oder mehreren der Ansprüche 27 bis 36, **dadurch gekennzeichnet, dass** die Beleuchtungs-Lichtquelle (78) und der Mess-Lichtquelle (62) Lichtstrahlen (64, 79) mit unterschiedlicher Lichtwellenlänge aussenden.

38. Vorrichtung nach Anspruch 37, **dadurch gekennzeichnet, dass** dem Sensor (76) ein Filter (74) vorgeschaltet ist, das für die Lichtwellenlänge des Beleuchtungs-Lichtstrahles (79) als Sperrfilter wirkt.

39. Vorrichtung nach einem oder mehreren der Ansprüche 26 bis 38, **dadurch gekennzeichnet, dass** der Reflektor gewölbt ist.

**Claims**

1. Method for visualizing a signature mark (18; 52) on a spectacle lens (16; 50), wherein an illumination light beam (22; 79) is directed onto the spectacle lens (16; 50), passes through the spectacle lens (16; 50), is reflected at a moving reflector (30; 56) after passing through the spectacle lens (16; 50), passes through the spectacle lens (16; 50) again and finally is passed to a camera (36; 88) as an observation light beam (34; 85), **characterized in that** the reflector (30; 56) is embodied as a retroreflector, which returns incident light substantially back in the same direction as from which it was incident for a large range of angles of incidence.

2. Method according to Claim 1, **characterized in that** a measurement light beam (64) is furthermore directed onto the spectacle lens (50) and then passed to a sensor (76) for the purposes of measuring a physical property of the spectacle lens (50), and **in that** the measurement light beam (64) is generated by a first light source (62) and the illumination light beam (79) is generated by a second light source (78), said light sources being structurally separate units.

3. Method for measuring a physical property of a spectacle lens (50) provided with a signature mark (52), wherein a measurement light beam (64) is directed onto the spectacle lens (50) and passed to a sensor (76), wherein, furthermore, an illumination light beam (79) is directed onto the spectacle lens (50) for visualizing the signature mark (52), wherein said illumination light beam passes through the spectacle lens (50), is reflected at a reflector (56) after passing through the spectacle lens (50), passes through the spectacle lens (50) again and finally is passed to a camera (88) as an observation light beam (85), **characterized in that** the measurement light beam (64) is generated by a first light source (62) and the illumination light beam (79) is generated by a second light source (78), said light sources being structurally separate units, wherein the illumination light beam (79) is reflected at a retroreflector (56) after passing through the spectacle lens (50), said retroreflector returning incident light substantially back in the same direction as from which it was incident for a large range of angles of incidence, and **in that** the retroreflector (56) is moved (58).

4. Method according to one or more of Claims 1 to 3, **characterized in that** the reflector (30; 56) is moved (42; 58) substantially across the direction of propagation of the illumination light beam (22; 79).

5. Method according to Claim 4, **characterized in that** the reflector (30; 56) is moved substantially periodically.

6. Method according to Claim 5, **characterized in that** the reflector (30; 60) is moved in a rotating manner.

7. Method according to Claim 5, **characterized in that** the reflector (30; 56) is moved in a parallel rotary translation.

8. Method according to Claim 4, **characterized in that** the reflector (30; 56) is moved substantially linearly.

9. Method according to one or more of Claims 5 to 8, **characterized in that** the frequency of the periodic movement of the reflector (30, 56) is adapted to a synchronizing signal of the camera (36; 88).

10. Method according to Claim 9, **characterized in that** the frequency is rotational-speed-synchronized with the synchronizing signal.

11. Method according to Claim 10, **characterized in that** the frequency is phase-synchronized with the synchronizing signal.

12. Method according to one or more of Claims 4 to 11, **characterized in that** the reflector (30; 56) is moved at a distance of 1 cm to 30 cm from the spectacle lens (16; 50).

13. Method according to one or more of Claims 1 to 12, **characterized in that** a video signal generated in the camera (36; 88) from the observation light beam (34; 85) is increased in terms of contrast by at least one convolution operation using finite neighbourhoods in each case.

14. Method according to Claim 13, **characterized in that** high spatial frequencies, e.g. on account of a differentiating effect, are increased to a greater extent than low spatial frequencies.

15. Method according to one or more of Claims 1 to 14, **characterized in that** the signature mark (18; 52) is determined by means of mark recognition from a video signal generated in the camera (36; 88) from the observation light beam (34; 85).

16. Method according to one or more of Claims 1 to 15, **characterized in that** a position of the spectacle lens (16; 50) on a support (12; 54) is determined from a video signal generated in the camera (36; 88) from the observation light beam (34; 85).

17. Method according to one or more of Claims 1 to 16, **characterized in that** a dioptric power of the spectacle lens (16; 50) is determined from a video signal generated in the camera (36; 88).

18. Method according to one or more of Claims 1 to 17, **characterized in that** the illumination light beam (22; 79) is coupled into the beam path of the observation light beam (34; 85).

19. Method according to one or more of Claims 2 to 18, **characterized in that** the measurement light beam (64) is coupled into the beam path of the observation light beam (85).

20. Method according to one or more of Claims 2 to 19, **characterized in that** the measurement light beam (64) is coupled into the beam path of the illumination light beam (79).

21. Method according to Claim 20, **characterized in that** the illumination light beam (79) is masked out at least in the impingement region of the measurement light beam (64) on the spectacle lens (50).

22. Method according to Claim 21, **characterized in that** the illumination light beam (79a, 79c) is generated as a light beam that is ring-shaped in cross section.

23. Method according to one or more of Claims 2 to 22, **characterized in that** the illumination light beam (79) and the measurement light beam (64) are generated with different light wavelengths.

24. Method according to Claim 23, **characterized in**

**that** the illumination light beam (79) is generated as red light and the measurement light beam (64) is generated as green light.

25. Method according to Claim 23 or 24, **characterized in that** the measurement light beam (64) incident on the sensor (76) is passed through a filter (74) which acts as a barrier filter for the light wavelength of the illumination light beam (79).

26. Apparatus for visualizing a signature mark (18; 52) on a spectacle lens (16; 50), comprising

- an illumination light source (20; 78) arranged on a first side of the spectacle lens (16; 50) and serving for generating an illumination light beam (22; 79), for identifying the signature mark (18; 52);
- a reflector (30; 56) arranged on that side of the spectacle lens (16; 50) which is situated opposite the first side;
- a camera (36; 87) for receiving an observation light beam (34; 85) coming from the spectacle lens (16; 50);
- first optical means (24; 73, 80, 81, 82, 83) for guiding the illumination light beam (22; 79) through the spectacle lens (16; 50); and
- second optical means (82, 83, 85, 86) for guiding to the camera (36; 87) the observation light beam (34; 85) reflected through the spectacle lens (16; 50) by the reflector (30; 56),

**characterized in that** the reflector (30; 56) is connected to a drive motor (40) for moving (42; 58) the reflector (30; 56), and wherein the reflector (30; 56) is embodied as a retroreflector, which returns incident light substantially back in the same direction as from which it was incident for a large range of angles of incidence.

27. Apparatus according to Claim 26, **characterized in that** the following is furthermore provided:

- a measurement light source (62) which is structurally separate from the illumination light source (78) and provided for generating a measurement light beam (64) for measuring a physical property of the spectacle lens (50);
- a sensor (76);
- third optical means (54, 66, 68, 70, 72) for guiding the measurement light beam (64) from the measurement light source (62) to the spectacle lens (50) and from the spectacle lens (50) to the sensor (76).

28. Apparatus for measuring a physical property of a spectacle lens (50) provided with a signature mark (52), comprising

- an illumination light source (78) arranged on a first side of the spectacle lens (50) and serving for generating an illumination light beam (79), for identifying the signature mark (52);
- a reflector (56) arranged on that side of the spectacle lens (50) which is situated opposite the first side;
- a camera (87) for receiving an observation light beam (85) coming from the spectacle lens (50) ;
- first optical means (73, 80, 81, 82, 83) for guiding the illumination light beam (79) through the spectacle lens (50);
- second optical means (82, 83, 85, 86) for guiding to the camera (87) the observation light beam (85) reflected through the spectacle lens (50) by the reflector (56);
- a measurement light source (62) provided for generating a measurement light beam (64) for measuring a physical property of the spectacle lens (50);
- a sensor (76); and
- third optical means (54, 66, 68, 70, 72) for guiding the measurement light beam (64) from the measurement light source (62) to the spectacle lens (50) and from the spectacle lens (50) to the sensor (76),

**characterized in that** the measurement light source (62) and the illumination light source (78), and also the first optical means (73, 80, 81, 82, 83) and the third optical means (54, 66, 68, 70, 72) are structurally separate units in each case, wherein the reflector (56) is a retroreflector, which returns incident light substantially back in the same direction as from which it was incident for a large range of angles of incidence, and **in that** the reflector (56) is connected to a drive motor (40) for moving (58) the reflector (56).

29. Apparatus, in particular according to one or more of Claims 26 to 28, **characterized in that** provision is made of a beam splitter (24; 81) for coupling the illumination light beam (22; 79) into the beam path of the observation light beam (34; 85).

30. Apparatus according to Claim 29, **characterized in that** provision is made of a light trap (76; 75) for a portion of the illumination light beam (22; 79) passing through the first beam splitter (24; 81).

31. Apparatus according to Claim 29 or 30, **characterized in that** an entrance pupil of the camera (36; 88) and an exit pupil of the illumination light source (20; 78) are arranged conjugated to the beam splitter (81).

32. Apparatus according to one or more of Claims 27 to 31, **characterized in that** provision is made of an optical means (73) for coupling the measurement light beam (64) into the beam path of the observation light beam (85).

33. Apparatus according to one or more of Claims 27 to 32, **characterized in that** provision is made of an optical means (73) for coupling the measurement light beam (64) into the beam path of the illumination light beam (79).

34. Apparatus according to Claim 33, **characterized in that** the illumination light source (78) has means which mask out the illumination light beam (79) at least in the impingement region of the measurement light beam (64) on the spectacle lens (50).

35. Apparatus according to Claim 34, **characterized in that** the illumination source (78) generates an illumination light beam (79c) that is ring-shaped in cross section.

36. Apparatus according to Claim 34 or 35, **characterized in that** the illumination light source (78) has a transparency (92) having a light-opaque spot (93) in the beam path of the illumination light beam (79a).

37. Apparatus according to one or more of Claims 27 to 36, **characterized in that** the illumination light source (78) and the measurement light source (62) emit light beams (64, 79) with different light wavelengths.

38. Apparatus according to Claim 37, **characterized in that** a filter (74) is disposed upstream of the sensor (76), said filter acting as a barrier filter for the light wavelength of the illumination light beam (79).

39. Apparatus according to one or more of Claims 26 to 38, **characterized in that** the reflector is curved.

**Revendications**

1. Méthode pour visualiser un repère (18, 52) sur un verre de lunettes (16, 50) pour laquelle un rayon lumineux d'éclairage (22, 79) est orienté sur le verre de lunettes (16, 50), qui traverse le verre de lunettes (16, 50), est réfléchi après traversée du verre de lunettes (16, 50) sur un réflecteur en mouvement (30, 56), traverse à nouveau le verre de lunettes (16, 50) et est dirigé finalement en tant que rayon lumineux d'observation (34, 85) vers une caméra (36, 88), **caractérisée en ce que** le réflecteur (30, 56) est constitué comme rétroréflecteur, qui renvoie la lumière incidente sur une grande plage d'angles d'incidence pour l'essentiel à nouveau dans la même direction à partir de laquelle elle tombe.

2. Méthode selon la revendication 1, **caractérisée en**

ce qu'en plus de mesurer une propriété physique du verre de lunettes (50), un rayon lumineux de mesure (64) est orienté sur le verre de lunettes (50) et est ensuite dirigé vers un capteur (76) et **en ce que** le rayon lumineux de mesure (64) est produit par une première source lumineuse (62) et le rayon lumineux d'éclairage (79) par une deuxième source lumineuse (78), qui sont des unités de conception différente.

3. Méthode pour mesurer une propriété physique d'un verre de lunettes (50) doté d'un repère (52), pour laquelle un rayon lumineux de mesure (64) est orienté sur le verre de lunettes (50) et est dirigé vers un capteur (76), pour lequel pour visualiser en plus le repère (52) un rayon lumineux d'éclairage (79) est orienté sur le verre de lunettes (50) qui traverse le verre de lunettes (50), est réfléchi après la traversée du verre de lunettes (50) sur un réflecteur (56), traverse à nouveau le verre de lunettes (50) et est dirigé finalement en tant que rayon lumineux d'observation (85) vers une caméra (88), **caractérisée en ce que** le rayon lumineux de mesure (64) est produit par une première source lumineuse (62) et le rayon lumineux d'éclairage (79) par une deuxième source lumineuse (78), qui sont des unités de conception différente, le rayon lumineux d'éclairage (79) étant réfléchi après la traversée du verre de lunettes (50) sur un rétroréflecteur (56) qui renvoie la lumière incidente sur une grande plage d'angles d'incidence pour l'essentiel à nouveau dans la même direction à partir de laquelle elle tombe et **en ce que** le rétroréflecteur (56) est en mouvement (58).

4. Méthode selon l'une quelconque ou plusieurs des revendications 1 à 3, **caractérisée en ce que** le réflecteur (30, 56) est déplacé (42, 58) pour l'essentiel transversalement à la direction de diffusion du rayon lumineux d'éclairage (22, 79).

5. Méthode selon la revendication 4, **caractérisée en ce que** le réflecteur (30, 56) est déplacé pour l'essentiel de manière périodique.

6. Méthode selon la revendication 5, **caractérisée en ce que** le réflecteur (30, 60) est déplacé de manière rotative.

7. Méthode selon la revendication 5, **caractérisée en ce que** le réflecteur (30, 56) est déplacé dans une translation rotative parallèle.

8. Méthode selon la revendication 4, **caractérisée en ce que** le réflecteur (30, 56) est déplacé pour l'essentiel de manière linéaire.

9. Méthode selon l'une quelconque ou plusieurs des revendications 5 à 8, **caractérisée en ce que** la fréquence du mouvement périodique du réflecteur (30, 56) est adaptée à un signal de synchronisation de la caméra (36, 88).

10. Méthode selon la revendication 9, **caractérisée en ce que** la fréquence est synchronisée en nombre de tours au signal de synchronisation.

11. Méthode selon la revendication 10, **caractérisée en ce que** la fréquence est synchronisée en phase au signal de synchronisation.

12. Méthode selon l'une quelconque ou plusieurs des revendications 4 à 11, **caractérisée en ce que** le réflecteur (30, 56) est déplacé d'une distance de 1 cm à 30 cm du verre de lunettes (16, 50).

13. Méthode selon l'une quelconque ou plusieurs des revendications 1 à 12, **caractérisée en ce qu'**un signal vidéo produit dans la caméra (36, 88) à partir du rayon lumineux d'observation (34, 85) est relevé en contraste par au moins une opération de convolution par le biais respectivement de voisinages finis.

14. Méthode selon la revendication 13, **caractérisée en ce que** les fréquences locales élevées, par ex. : en raison d'un effet différentiel, sont plus fortement relevées que les fréquences locales basses.

15. Méthode selon l'une quelconque ou plusieurs des revendications 1 à 14, **caractérisée en ce que** le repère (18, 52) est déterminé au moyen d'une identification de repère à partir d'un signal vidéo produit dans la caméra (36, 88) à partir du rayon lumineux d'observation (34, 85).

16. Méthode selon l'une quelconque ou plusieurs des revendications 1 à 15, **caractérisée en ce qu'**une position du verre de lunettes (16, 50) sur un support (12, 54) est déterminée à partir d'un signal vidéo produit dans la caméra (36, 88) à partir du rayon lumineux d'observation (34, 85).

17. Méthode selon l'une quelconque ou plusieurs des revendications 1 à 16, **caractérisée en ce qu'**un effet dioptrique du verre de lunettes (16, 50) est déterminé à partir d'un signal vidéo produit dans la caméra (36, 88).

18. Méthode selon l'une quelconque ou plusieurs des revendications 1 à 17, **caractérisée en ce que** le rayon lumineux d'éclairage (22, 79) est injecté dans la trajectoire de rayon du rayon lumineux d'observation (34, 85).

19. Méthode selon l'une quelconque ou plusieurs des revendications 2 à 18, **caractérisée en ce que** le rayon lumineux de mesure (64) est injecté dans la trajectoire de rayon du rayon lumineux d'observation (85).

20. Méthode selon l'une quelconque ou plusieurs des revendications 2 à 19, **caractérisée en ce que** le rayon lumineux de mesure (64) est injecté dans la trajectoire de rayon du rayon lumineux d'éclairage (79).

21. Méthode selon la revendication 20, **caractérisée en ce que** le rayon lumineux d'éclairage (79) est diaphragmé au moins dans la zone d'incidence du rayon lumineux de mesure (64) sur le verre de lunettes (50).

22. Méthode selon la revendication 21, **caractérisée en ce que** le rayon lumineux d'éclairage (79a, 79c) est produit comme un rayon lumineux de forme annulaire en section.

23. Méthode selon l'une quelconque ou plusieurs des revendications 2 à 22, **caractérisée en ce que** le rayon lumineux d'éclairage (79) et le rayon lumineux de mesure (64) sont produits avec une longueur d'onde optique différente.

24. Méthode selon la revendication 23, **caractérisée en ce que** le rayon lumineux d'éclairage (79) est produit sous la forme d'une lumière rouge et le rayon lumineux de mesure (64) sous la forme d'une lumière verte.

25. Méthode selon la revendication 23 ou 24, **caractérisée en ce que** le rayon lumineux de mesure (64) tombant sur le capteur (76) est dirigé par un filtre (74) qui agit comme filtre d'arrêt pour la longueur d'onde optique du rayon lumineux d'éclairage (79).

26. Dispositif pour visualiser un repère (18, 52) sur un verre de lunettes (16, 50) avec

- une source lumineuse (20, 78) disposée sur un premier côté du verre de lunettes (16, 50) pour produire un rayon lumineux d'éclairage (22, 79) pour une identification du repère (18, 52),
- un réflecteur (30 , 56) disposé sur le côté opposé au premier côté du verre de lunettes (16, 50),
- une caméra (36, 87) pour recevoir un rayon lumineux d'observation (34, 85) venant du verre de lunettes (16, 50),
- des premiers moyens optiques (24, 73, 80, 81, 82, 83) pour guider le rayon lumineux d'éclairage (22, 79) à travers le verre de lunettes (16, 50), et
- des deuxièmes moyens optiques (82, 83, 85, 86) pour guider le rayon lumineux d'observation (34, 85) réfléchi par le réflecteur (30, 56) à travers le verre de lunettes (16, 50) vers la caméra (36, 87),

**caractérisé en ce que** le réflecteur (30, 56) est relié à un moteur d'entraînement (40) pour déplacer (42, 58) le réflecteur (30, 56), et le réflecteur (30, 56) étant constitué comme un rétroréflecteur, qui renvoie la lumière incidente sur une grande plage d'angles d'incidence pour l'essentiel à nouveau dans la même direction que celle d'où elle tombe.

27. Dispositif selon la revendication 26, **caractérisé en ce que** sont en plus prévus

- une source lumineuse de mesure (62) de conception différente de la source lumineuse d'éclairage (78) pour produire un rayon lumineux de mesure (64) pour une mesure d'une propriété physique du verre de lunettes (50),
- un capteur (76),
- un troisième moyen optique (54, 66, 68, 70, 72) pour guider le rayon lumineux de mesure (64) de la source lumineuse de mesure (62) vers le verre de lunettes (50) et du verre de lunettes (50) vers le capteur (76).

28. Dispositif pour mesurer une propriété physique d'un verre de lunettes (50) doté d'un repère (52), avec

- une source lumineuse d'éclairage (78) disposée sur un premier côté du verre de lunettes (50) pour produire un rayon lumineux d'éclairage (79) pour une identification du repère (52),
- un réflecteur (56) disposé sur le côté opposé au premier côté du verre de lunettes (50),
- une caméra (87) pour recevoir un rayon lumineux d'observation (85) venant du verre de lunettes (50),
- des premiers moyens optiques (73, 80, 81, 82, 83) pour guider le rayon lumineux d'éclairage (79) à travers le verre de lunettes (50),
- des deuxièmes moyens optiques (82, 83, 85, 86) pour guider le rayon lumineux d'observation (85) réfléchi par le réflecteur (56) à travers le verre de lunettes (50) vers la caméra (87),
- une source lumineuse de mesure (62) pour produire un rayon lumineux de mesure (64) pour une mesure d'une propriété physique du verre de lunettes (50),
- un capteur (76), et
- des troisièmes moyens optiques (54, 66, 68, 70, 72) pour guider le rayon lumineux de mesure (64) de la source lumineuse de mesure (62) vers le verre de lunettes (50) et du verre de lunettes (50) vers le capteur (76),

**caractérisé en ce que** la source lumineuse de mesure (62) et la source lumineuse d'éclairage (78) ainsi que les premiers moyens optiques (73, 80, 81, 82, 83) et les troisièmes moyens optiques (54, 66, 68, 70, 72) sont des unités respectivement différentes de conception, le réflecteur (56) étant un rétroréflecteur qui renvoie la lumière incidente sur une grande plage d'angles d'incidence pour l'essentiel à nouveau dans la même direction que celle à partir de laquelle elle tombe et **en ce que** le réflecteur (56) est relié à un moteur d'entraînement (40) pour déplacer (58) le réflecteur (56).

29. Dispositif, en particulier selon l'une quelconque ou plusieurs des revendications 26 à 28, **caractérisé en ce qu'**un séparateur de faisceau (24, 81) est prévu pour injecter le rayon lumineux d'éclairage (22, 79) dans la trajectoire de rayon du rayon lumineux d'observation (34, 85).

30. Dispositif selon la revendication 29, **caractérisé en ce qu'**un piège de lumière (76, 75) est prévu pour une partie du rayon lumineux d'éclairage (22,79) pénétrant à travers le premier séparateur de faisceau (24, 81).

31. Dispositif selon la revendication 29 ou 30, **caractérisé en ce qu'**une pupille d'entrée de la caméra (36, 88) et une pupille de sortie de la source lumineuse d'éclairage (20, 78) sont disposées conjuguées vers le séparateur de faisceau (81).

32. Dispositif selon l'une quelconque ou plusieurs des revendications 27 à 31, **caractérisé en ce qu'**un moyen optique (73) est prévu pour injecter le rayon lumineux de mesure (64) dans la trajectoire de rayon du rayon lumineux d'observation (85).

33. Dispositif selon l'une quelconque ou plusieurs des revendications 27 à 32, **caractérisé en ce qu'**un moyen optique (73) est prévu pour injecter le rayon lumineux de mesure (64) dans la trajectoire de rayon du rayon lumineux d'éclairage (79).

34. Dispositif selon la revendication 33, **caractérisé en ce que** la source lumineuse d'éclairage (78) comporte des moyens qui diaphragment le rayon lumineux d'éclairage (79) au moins dans la zone d'incidence du rayon lumineux de mesure (64) sur le verre de lunettes (50).

35. Dispositif selon la revendication 34, **caractérisé en ce que** la source d'éclairage (78) produit un rayon lumineux d'éclairage (79c) de forme annulaire en section.

36. Dispositif selon la revendication 34 ou 35, **caractérisé en ce que** la source lumineuse d'éclairage (78) comporte un cache (92) avec une tache opaque (93) dans la trajectoire de rayon du rayon lumineux d'éclairage (79a).

**37.** Dispositif selon l'une quelconque ou plusieurs des revendications 27 à 36, **caractérisé en ce que** la source lumineuse d'éclairage (78) et la source lumineuse de mesure (62) émettent des rayons lumineux (64, 79) avec une longueur d'onde optique différente.

**38.** Dispositif selon la revendication 37, **caractérisé en ce qu'**un filtre (74) est monté en amont du capteur (76) qui agit comme filtre d'arrêt pour la longueur d'onde optique du rayon lumineux d'éclairage (79).

**39.** Dispositif selon l'une quelconque ou plusieurs des revendications 26 à 38, **caractérisé en ce que** le réflecteur est bombé.

EP 1 646 855 B1

Fig.1

19

Fig.2

EP 1 646 855 B1

Fig.3

Fig.4

Fig.5

Fig.6

Fig.7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3892494 A
- US 4310242 A
- DE 4343345 A1
- EP 0169444 A2
- DE 19740391
- EP 1167942 A2
- US 5867259 A